# EUROPEAN PATENT APPLICATION

(11) **EP 4 541 605 A1**
(43) Date of publication of application: **23.04.2025**
(21) Application number: 24203624.2
(22) Date of filing: 30.09.2024
(51) Int. Cl.: B60C 19/00

(54) **PNEUMATIC TIRE**

(30) Priority: 16.10.2023 JP 2023178405
(71) Applicant: Sumitomo Rubber Industries, Ltd., Kobe-shi, Hyogo 651-0072 (JP)
(72) Inventor: MATSUNAMI, SHO, Kobe-shi, 651-0072 (JP); YUKAWA, NAOKI, Kobe-shi, 651-0072 (JP); SATO, TAKUYA, Kobe-shi, 651-0072 (JP)
(74) Representative: Manitz Finsterwald Patent- und Rechtsanwaltspartnerschaft mbB

(57) **Abstract**

Provided is a pneumatic tire capable of decreasing cavity resonance sound with a simple configuration. The present invention is directed to a pneumatic tire 1 including a plurality of Helmholtz sound absorbers 9 disposed on a tire inner cavity surface 1i. The plurality of Helmholtz sound absorbers 9 have a first resonance frequency f1 as a maximum resonance frequency fmax and a second resonance frequency f2 as a minimum resonance frequency fmin. A difference (f1-f2) between the first resonance frequency f1 and the second resonance frequency f2 is 10 to 90 Hz.

## Description

### BACKGROUND OF THE INVENTION

### Field of the Invention

The present invention relates to a pneumatic tire capable of decreasing cavity resonance sound.

### Background Art

Conventionally, pneumatic tires including means for decreasing cavity resonance sound generated in the tires during running have been known. For example, Japanese Patent No. 6289506 proposes a pneumatic tire having an inner circumferential surface mounted with a large number of resonators which are Helmholtz sound absorbers.

However, the pneumatic tire in Japanese Patent No. 6289506 is required to have the large number of Helmholtz sound absorbers having different resonance frequencies in order to deal with cavity resonance sound, in the tire, that differs according to the running speed. Thus, regarding this pneumatic tire, further enhancement has been required in terms of manufacturing and in terms of weight as well.

The present invention has been made in view of the above circumstances, and a main object of the present invention is to provide a pneumatic tire capable of decreasing cavity resonance sound with a simple configuration.

### SUMMARY OF THE INVENTION

The present invention is directed to a pneumatic tire including a plurality of Helmholtz sound absorbers disposed on a tire inner cavity surface, wherein the plurality of Helmholtz sound absorbers have a first resonance frequency as a maximum resonance frequency and a second resonance frequency as a minimum resonance frequency, and a difference between the first resonance frequency and the second resonance frequency is 10 to 90 Hz.

The pneumatic tire according to the present invention has the above configuration, and thus can decrease cavity resonance sound with a simple configuration.

### BRIEF DESCRIPTION OF THE DRAWINGS

FIG. 1 is a cross-sectional view showing a pneumatic tire according to an embodiment of the present invention;
FIG. 2 is a schematic cross-sectional view of the pneumatic tire as seen in a tire axial direction;
FIG. 3 is a perspective view of a Helmholtz sound absorber in the present embodiment;
FIG. 4 is a perspective view of a Helmholtz sound absorber in a second embodiment;
FIG. 5 is a perspective view of a Helmholtz sound absorber in a third embodiment; and
FIG. 6 is a cross-sectional view of a pneumatic tire according to another embodiment.

### DETAILED DESCRIPTION

Hereinafter, an embodiment of the present invention will be described in detail with reference to the drawings.

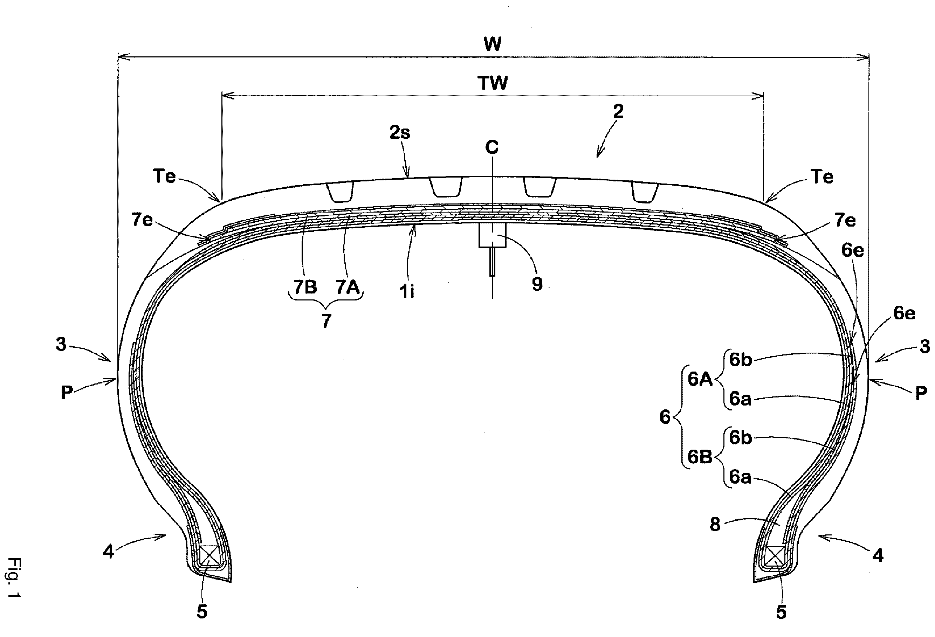

FIG. 1 is a tire meridian cross-sectional view showing a pneumatic tire 1 in a standardized state according to the present embodiment. Here, the "standardized state" refers to a state where: the pneumatic tire 1 is mounted on a standardized rim and adjusted to a standardized internal pressure; and no load is applied to the pneumatic tire 1. Hereinafter, dimensions and the like of constituents of the pneumatic tire 1 are values measured in the standardized state, unless otherwise specified.

If there is a standard system including a standard on which the pneumatic tire 1 is based, the "standardized rim" is a rim defined for each tire by the standard and is, for example, the "standard rim" in the JATMA standard, the "Design Rim" in the TRA standard, or the "Measuring Rim" in the ETRTO standard. If there is no standard system including a standard on which the pneumatic tire 1 is based, the "standardized rim" is a rim having the smallest rim diameter and having the smallest rim width, among rims on which the pneumatic tire 1 can be mounted and which do not cause air leakage.

If there is a standard system including a standard on which the pneumatic tire 1 is based, the "standardized internal pressure" is an air pressure defined for each tire by the standard and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard. If there is no standard system including a standard on which the pneumatic tire 1 is based, the "standardized internal pressure" is an air pressure defined for each tire by the manufacturer or the like.

As shown in FIG. 1, the pneumatic tire 1 according to the present embodiment is suitably used as a tire for passenger cars. The pneumatic tire 1 is not limited to a tire for passenger cars and is applicable to various tires such as a heavy-duty tire, a tire for motorcycles, a tire for racing vehicles, and a tire for industrial vehicles, for example.

The pneumatic tire 1 according to the present embodiment includes a tread portion 2, a pair of sidewall portions 3, and a pair of bead portions 4. Each of the sidewall portions 3 is, for example, a portion extending to an inner side in a tire radial direction from a corresponding one of both ends in a tire axial direction of the tread portion 2. Each of the bead portions 4 is, for example, a portion located on the inner side in the tire radial direction relative to a corresponding one of the sidewall portions 3. The bead portion 4 in the present embodiment is a portion in contact with the standardized rim.

Each of the pair of bead portions 4 has, for example, an annular bead core 5 extending in a tire circumferential direction and a bead apex 8 extending to an outer side in the tire radial direction from the bead core 5. The bead core 5 is formed of, for example, a steel wire. The bead apex 8 is formed of, for example, hard rubber. Such a bead portion 4 has a high rigidity. Thus, the bead portion 4 suppresses deformation during running and contributes to decrease of cavity resonance sound in the pneumatic tire 1.

The pneumatic tire 1 according to the present embodiment includes: a carcass 6 extending between the pair of bead portions 4; and a belt layer 7 disposed in the tread portion 2. The belt layer 7 is disposed on the outer side in the tire radial direction relative to the carcass 6, for example. The pneumatic tire 1 desirably includes a tire inner cavity surface 1i which is located inward of the carcass 6 and which delimits a tire inner cavity.

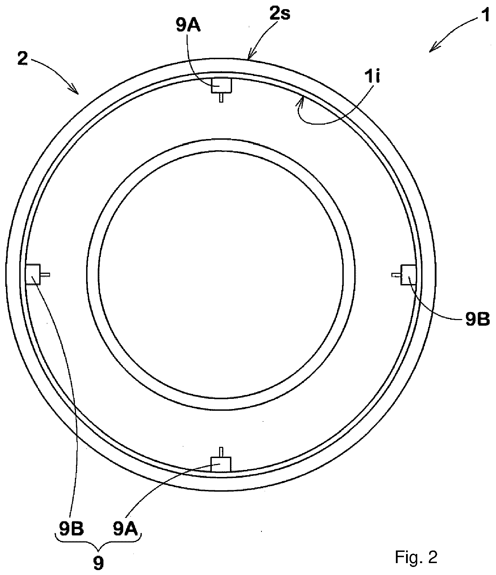

FIG. 2 is a schematic cross-sectional view of the pneumatic tire 1 as seen in the tire axial direction. As shown in FIG. 1 and FIG. 2, the pneumatic tire 1 according to the present embodiment includes a plurality of Helmholtz sound absorbers 9 disposed on the tire inner cavity surface 1i. The plurality of Helmholtz sound absorbers 9 in the present embodiment have a first resonance frequency f1 as a maximum resonance frequency fmax and a second resonance frequency f2 as a minimum resonance frequency fmin. Such a pneumatic tire 1 resonates at the plurality of frequencies, and thus can decrease cavity resonance sound, in the tire, that differs according to the running speed.

A difference (f1-f2) between the first resonance frequency f1 and the second resonance frequency f2 is preferably 10 to 90 Hz. Such a pneumatic tire 1 can efficiently decrease cavity resonance sound generated at a running speed of 10 to 200 km/h and enables decrease in the number of the Helmholtz sound absorbers 9. Consequently, the pneumatic tire 1 according to the present embodiment can decrease the cavity resonance sound with a simple configuration. From this viewpoint, the difference (f1-f2) between the first resonance frequency f1 and the second resonance frequency f2 is more preferably 10 to 60 Hz.

In a more preferable mode, the first resonance frequency f1 of the Helmholtz sound absorbers 9 is 130 to 350 Hz. The second resonance frequency f2 of the Helmholtz sound absorbers 9 is preferably 120 to 340 Hz. Such Helmholtz sound absorbers 9 can cover a frequency band of cavity resonance sound generated by a tire for passenger cars and can efficiently decrease the cavity resonance sound in a tire for passenger cars.

As shown in FIG. 1, the carcass 6 includes at least one carcass ply, and in the present embodiment, includes two carcass plies 6A and 6B. The two carcass plies 6A and 6B are, for example, a first carcass ply 6A located, in the tread portion 2, on the inner side in the tire radial direction and a second carcass ply 6B located, in the tread portion 2, on the outer side in the tire radial direction relative to the first carcass ply 6A.

At least one of the carcass plies 6A and 6B desirably includes: a body portion 6a extending from the tread portion 2 through the sidewall portions 3 to the bead cores 5 of the bead portions 4; and turned-up portions 6b contiguous with the body portion 6a and turned up around the respective bead cores 5 from an inner side to an outer side in the tire axial direction. In the present embodiment, each of the first carcass ply 6A and the second carcass ply 6B includes the body portion 6a and the turned-up portions 6b. Such a carcass 6 contributes to improvement of the rigidities of the bead portions 4 and decrease of cavity resonance sound in the pneumatic tire 1.

At least one of the carcass plies 6A and 6B is such that an outer end 6e in the tire radial direction of each of the turned-up portions 6b is desirably located on the outer side in the tire radial direction relative to a tire maximum width position P at which a tire cross-sectional width W is maximum. The carcass 6 is, for example, such that: the outer end 6e of the turned-up portion 6b of the first carcass ply 6A is located on the outer side in the tire radial direction relative to the tire maximum width position P; and the outer end 6e of the turned-up portion 6b of the second carcass ply 6B is located on the inner side in the tire radial direction relative to the tire maximum width position P. Such a carcass 6 can achieve both the rigidities of the sidewall portions 3 and decrease in weight, and can decrease cavity resonance sound in, and the rolling resistance of, the pneumatic tire 1.

Each of the carcass plies 6A and 6B includes, for example, carcass cords (not shown) which are organic fiber cords. Examples of the organic fiber cords include: single-fiber cords each made from one type of fiber selected from the group consisting of polyethylene terephthalate fibers, polyethylene naphthalate fibers, nylon fibers, aramid fibers, and rayon fibers; and hybrid-fiber cords each made from two or more types of fibers selected from said group.

The carcass cords are preferably arranged at an angle of 25 to 90° relative to the tire circumferential direction. If the carcass cords are tilted at an angle of smaller than 90° relative to the tire circumferential direction, the carcass cords of the first carcass ply 6A and the carcass cords of the second carcass ply 6B are desirably tilted in mutually opposite directions relative to the tire circumferential direction. For the carcass 6, for example, a bias structure may be employed. Here, the angle of each of the carcass cords is an angle obtained with the pneumatic tire 1 being in the standardized state and can be ascertained by, for example, partially peeling the tread portion 2.

The belt layer 7 includes at least one belt ply and preferably includes two or more belt plies. In the present embodiment, the belt layer 7 includes two belt plies 7A and 7B. The two belt plies 7A and 7B are, for example, a first belt ply 7A located on the inner side in the tire radial direction and a second belt ply 7B located on the outer side in the tire radial direction relative to the first belt ply 7A. The belt layer 7 in the present embodiment has outer ends 7e which are outer ends 7e in the tire axial direction of the first belt ply 7A. Such a belt layer 7 can improve the rigidity of the tread portion 2 and can decrease cavity resonance sound in the pneumatic tire 1.

Each of the belt plies 7A and 7B includes, for example, belt cords (not shown) which are steel cords. The belt cords may each be, for example, a single steel wire or a twisted wire obtained by twisting a plurality of steel filaments together.

The belt cords are arranged at, for example, an angle of 10 to 30° relative to the tire circumferential direction. The belt cords of the first belt ply 7A and the belt cords of the second belt ply 7B are desirably tilted in mutually opposite directions relative to the tire circumferential direction. Such a belt layer 7 can improve the rigidity of the tread portion 2 in a balanced manner and can decrease cavity resonance sound in the pneumatic tire 1. Here, the angle of each of the belt cords is an angle obtained with the pneumatic tire 1 being in the standardized state and can be ascertained by, for example, partially peeling the tread portion 2.

The tread portion 2 in the present embodiment has a ground-contact surface 2s extending between a pair of tread ends Te. Here, the tread ends Te are outermost ground-contact positions in the tire axial direction when: 70% of a standardized load is applied to the pneumatic tire 1 in the standardized state; and the pneumatic tire 1 in this state is brought into contact with a flat surface at a camber angle of 0°. The ground-contact surface 2s has a tire tread width TW which is the distance in the tire axial direction between the pair of tread ends Te. The center position in the tire axial direction between the pair of tread ends Te is a tire equator C.

If there is a standard system including a standard on which the pneumatic tire 1 is based, the "standardized load" is a load defined for each tire by the standard and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard. If there is no standard system including a standard on which the pneumatic tire 1 is based, the "standardized load" is a load defined for each tire by the manufacturer or the like as a maximum load that can be applied during use of the pneumatic tire 1.

Each of the plurality of Helmholtz sound absorbers 9 in the present embodiment is disposed on the inner side in the tire radial direction relative to the ground-contact surface 2s. That is, each of the plurality of Helmholtz sound absorbers 9 is desirably disposed within the range of the tire tread width TW with the tire equator C being the center of the range. The plurality of Helmholtz sound absorbers 9 are arranged in one row on the tire equator C, for example. Such Helmholtz sound absorbers 9 receive force in such a direction as to be pressed against the tire inner cavity surface 1i when centrifugal force is applied, whereby the risk that the Helmholtz sound absorbers 9 peel from the tire inner cavity surface 1i can be decreased.

Each of the outer ends 7e of the belt layer 7 in the present embodiment is located on the outer side in the tire axial direction relative to a corresponding one of the tread ends Te. Such a belt layer 7 can improve the rigidity of the entirety of the ground-contact surface 2s of the tread portion 2 and contributes to decrease of cavity resonance sound in the pneumatic tire 1.

Each of the plurality of Helmholtz sound absorbers 9 in the present embodiment is disposed on the inner side in the tire radial direction relative to the belt layer 7. With such a Helmholtz sound absorber 9, since deformation of the tread portion 2 upon contact with the ground is suppressed by the belt layer 7 having a high rigidity, resonance sound generated from the Helmholtz sound absorber 9 owing to impact upon the contact with the ground can be suppressed.

As shown in FIG. 2, the plurality of Helmholtz sound absorbers 9 are desirably arranged away from each other. The plurality of Helmholtz sound absorbers 9 are arranged away from each other in the tire circumferential direction, for example. Such Helmholtz sound absorbers 9 can decrease cavity resonance sound over the entire region of the pneumatic tire 1.

The plurality of Helmholtz sound absorbers 9 in the present embodiment include a plurality of first sound absorbers 9A each having the first resonance frequency f1 and a plurality of second sound absorbers 9B each having the second resonance frequency f2. The number of the first sound absorbers 9A provided in each of rows arranged in the tire circumferential direction is desirably an even number, and the number of the second sound absorbers 9B provided in each of the rows is desirably an even number. Such Helmholtz sound absorbers 9 facilitate adjustment of balance at the time of rotation of the tire. Although Helmholtz sound absorbers arranged in one row are presented as an example of the plurality of Helmholtz sound absorbers 9 in the present embodiment, the plurality of Helmholtz sound absorbers 9 may be arranged in a plurality of rows.

A pair of the first sound absorbers 9A provided in each of the rows are disposed at, for example, positions opposed to each other with a tire rotation axis therebetween. A pair of the second sound absorbers 9B provided in each of the rows are disposed at, for example, positions opposed to each other with the tire rotation axis therebetween. Such Helmholtz sound absorbers 9 are excellent in balance at the time of rotation of the tire and can suppress generation of vibrations and noise during running with the pneumatic tire 1.

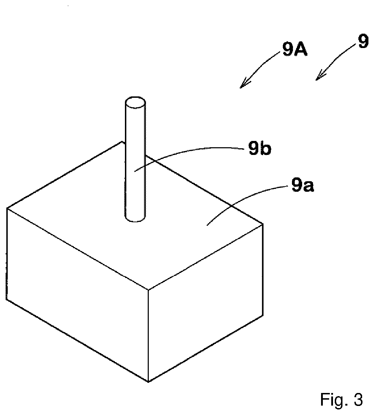

FIG. 3 is a perspective view of any of the Helmholtz sound absorbers 9 in the present embodiment. As shown in FIG. 3, the Helmholtz sound absorber 9 includes: a sound absorption chamber 9a having a space therein; and a tube portion 9b connecting the sound absorption chamber 9a and the tire inner cavity to each other. Such a Helmholtz sound absorber 9 can have a different resonance frequency f by adjusting the volume of the sound absorption chamber 9a and the length of the tube portion 9b.

Each of the first sound absorbers 9A in the present embodiment includes a first sound absorption chamber 9a having the first resonance frequency f1. Although not shown, each of the second sound absorbers 9B includes, for example, a second sound absorption chamber 9c having the second resonance frequency f2.

Each of the plurality of Helmholtz sound absorbers 9 is desirably formed of a resin having a shape that does not change at 120°C or lower. Such a Helmholtz sound absorber 9 can maintain the sound absorption performance thereof without any change in the shape even when the temperature of the pneumatic tire 1 becomes high during running at a high speed.

Examples of the material of the Helmholtz sound absorber 9 include polypropylene (PP), polystyrene (PS), polyethylene terephthalate (PET), polyvinylidene chloride (PVDC), polyvinylidene fluoride (PVDF), polyamides (PA), polycarbonates (PC), polyphenylene sulfide (PPS), polyimides (PI), polyetherimide (PEI), polysulfone (PSF), polysulfone (PSU), polytetrafluoroethylene (PTFE), polychlorotrifluoroethylene (PCTFE), polyamide-imides (PAI), phenol resins (PF), melamine resins (MF), unsaturated polyesters (UP), polyurethane (PU), polydiallyl phthalate (PDAP), silicon resins (SI), epoxy resins (EP), furan-formaldehyde resins (FF), cellulose acetate (CA), cellulose nitrate (CN), cellulose propionate (CP), ethylcellulose (EC), and the like.

The plurality of Helmholtz sound absorbers 9 may further have, for example, at least one resonance frequency f different from the first resonance frequency f1 and the second resonance frequency f2. Such Helmholtz sound absorbers 9 can widely resonate with a frequency band of cavity resonance sound and can more assuredly decrease cavity resonance sound.

The plurality of Helmholtz sound absorbers 9 are desirably such that unit widths df which are differences between a set of the resonance frequencies f adj acent to each other in a frequency band are substantially equal. Here, the fact that the unit widths df are substantially equal means that the difference between every two unit widths df is 10% or lower of each of said unit widths df. Such Helmholtz sound absorbers 9 can evenly absorb sound over the entire frequency band.

Each of the unit widths df in the plurality of Helmholtz sound absorbers 9 is preferably 3 to 10 Hz. Such Helmholtz sound absorbers 9 can evenly absorb sound over the entire frequency band without excessively increasing the number of types of the Helmholtz sound absorbers 9.

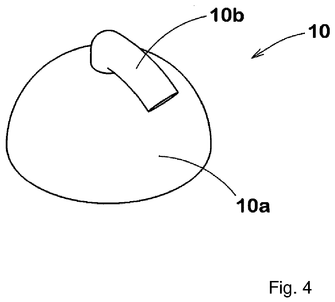

FIG. 4 is a perspective view of a Helmholtz sound absorber 10 in a second embodiment. As shown in FIG. 4, each of a plurality of the Helmholtz sound absorbers 10 may include, for example, a sound absorption chamber 10a having a hemispherical shape and a tube portion 10b extending along the sound absorption chamber 10a. Such a Helmholtz sound absorber 10 can absorb cavity resonance sound in the tire inner cavity in a balanced manner by adjusting the orientation of the tube portion 10b.

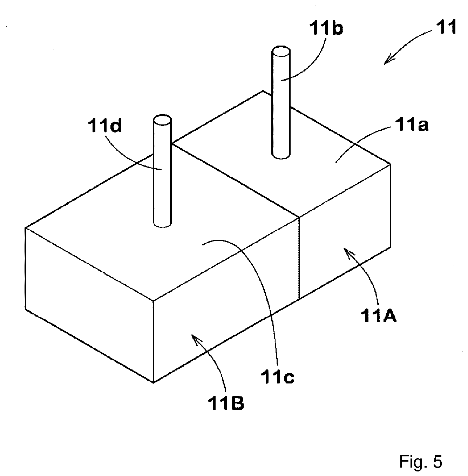

FIG. 5 is a perspective view of a Helmholtz sound absorber 11 in a third embodiment. As shown in FIG. 5, each of a plurality of the Helmholtz sound absorbers 11 may include, for example, at least one first sound absorption chamber 11a having the first resonance frequency f1 and at least one second sound absorption chamber 11c having the second resonance frequency f2. Such Helmholtz sound absorbers 11 enable one of the Helmholtz sound absorbers 11 to have the plurality of resonance frequencies f. Consequently, the Helmholtz sound absorbers 11 in the third embodiment can decrease cavity resonance sound with a simple configuration.

A first sound absorber 11A having the first sound absorption chamber 11a and a second sound absorber 11B having the second sound absorption chamber 11c are desirably formed to be integrated with each other. Such Helmholtz sound absorbers 11 enables decrease in the number of parts, and furthermore, can decrease cavity resonance sound over a wide frequency band.

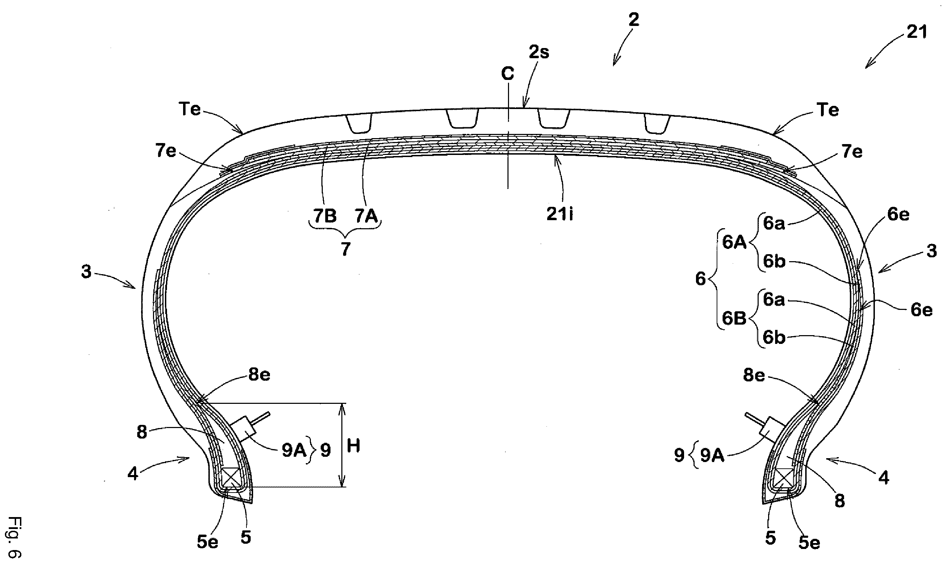

FIG. 6 is a tire meridian cross-sectional view showing a pneumatic tire 21 in the standardized state according to another embodiment. As shown in FIG. 6, similar to the above pneumatic tire 1, the pneumatic tire 21 according to the present embodiment includes the tread portion 2, the pair of sidewall portions 3, and the pair of bead portions 4. Each of the bead portions 4 has, for example, the annular bead core 5 extending in the tire circumferential direction and the bead apex 8 extending to the outer side in the tire radial direction from the bead core 5.

The pneumatic tire 21 according to the present embodiment includes: the carcass 6 extending between the pair of bead portions 4; and the belt layer 7 disposed, in the tread portion 2, on the outer side in the tire radial direction relative to the carcass 6. The carcass 6 includes, for example, the two carcass plies 6A and 6B each having the body portion 6a and the turned-up portions 6b. The belt layer 7 includes, for example, the two belt plies 7A and 7B. Similar to the above pneumatic tire 1, the pneumatic tire 21 desirably includes a tire inner cavity surface 21i which is located inward of the carcass 6 and which delimits the tire inner cavity.

Similar to the above pneumatic tire 1, the pneumatic tire 21 according to the present embodiment includes the plurality of Helmholtz sound absorbers 9 disposed on the tire inner cavity surface 21i. Each of the plurality of Helmholtz sound absorbers 9 in the present embodiment is disposed on the inner side in the tire axial direction relative to at least one of either of the sidewall portions 3 and either of the bead portions 4. Such a Helmholtz sound absorber 9 makes it possible to, even when the tread portion 2 is deformed upon contact with the ground, suppress shift of the Helmholtz sound absorber 9 itself and suppress resonance sound generated from the Helmholtz sound absorber 9 owing to impact upon the contact with the ground.

Each of the plurality of Helmholtz sound absorbers 9 is desirably disposed on the inner side in the tire axial direction relative to either of the bead portions 4. Such a Helmholtz sound absorber 9 does not raise a concern that the Helmholtz sound absorber 9 might generate resonance sound owing to impact upon contact with the ground. Thus, the Helmholtz sound absorber 9 can more assuredly decrease cavity resonance sound.

Each of the plurality of Helmholtz sound absorbers 9 is disposed on the inner side in the tire axial direction within a range extending from an inner end 5e in the tire radial direction of either of the bead cores 5 to an outer end 8e in the tire radial direction of a corresponding one of the bead apexes 8, for example. That is, each of the plurality of Helmholtz sound absorbers 9 is desirably disposed within a range of a height H from the inner end 5e of either of the bead cores 5 to the outer end 8e of the corresponding one of the bead apexes 8. Such a Helmholtz sound absorber 9 can more assuredly decrease cavity resonance sound since the Helmholtz sound absorber 9 is disposed within such a range that a high rigidity is imparted.

In a case where each of the plurality of Helmholtz sound absorbers 9 is disposed on the inner side in the tire axial direction relative to either of the sidewall portions 3, the Helmholtz sound absorber 9 is desirably disposed on the inner side in the tire radial direction relative to either of the outer ends 6e of each of the carcass plies 6A and 6B. Such a Helmholtz sound absorber 9 contributes to suppression of resonance sound generated from the Helmholtz sound absorber 9 owing to impact upon contact with the ground.

Although the particularly preferred embodiments of the present invention have been described in detail above, the present invention is not limited to the above-described embodiments, and various modifications can be made to implement the present invention.

### EXAMPLES

On the basis of FIG. 1 to FIG. 3 and FIG. 6, pneumatic tires in Examples each having a tire size of 215/55R17 were produced as samples according to the specifications indicated in Table 1. In a Comparative Example, a pneumatic tire that had the same size and that had no Helmholtz sound absorbers was produced as a sample. Noise performances at different running speeds were tested by using the pneumatic tires produced as samples.

### <Noise Performances>

Each of the pneumatic tires produced as samples was mounted to a tester on a support, and running was performed at a speed of 20 km/h, a speed of 60 km/h, and a speed of 150 km/h. At the time of the running at each of these speeds, axial forces were measured, and a low-frequency-side sound pressure and a high-frequency-side sound pressure of cavity resonance sound were obtained. The results are indicated as indexes with results in the Comparative Example being regarded as 100. A smaller numerical value indicates a lower sound pressure and a better noise performance.

The results of the tests are indicated in Table 1.

**[Table 1]**

| | Comparative Example 1 | Example 1 | Example 2 | Example 3 | Example 4 |
|---|---|---|---|---|---|
| Positions of Helmholtz sound absorbers | - | Ground-contact surface (FIG. 1) | Bead portions (FIG. 6) | Ground-contact surface (FIG. 1) | Bead portions (FIG. 6) |
| Resonance frequency of first sound absorber (Hz) | - | 210 | 210 | 225 | 225 |
| Resonance frequency of second sound absorber (Hz) | - | 201 | 201 | 195 | 195 |
| Resonance frequency of third sound absorber (Hz) | - | - | - | 220 | 220 |
| Resonance frequency of fourth sound absorber (Hz) | - | - | - | 215 | 215 |
| Resonance frequency of fifth sound absorber (Hz) | - | - | - | 210 | 210 |
| Resonance frequency of sixth sound absorber (Hz) | - | - | - | 205 | 205 |
| Resonance frequency of seventh sound absorber (Hz) | - | - | - | 200 | 200 |
| Low-frequency-side noise performance at speed of 20 Km/h (index) | 100 | 80 | 70 | 50 | 50 |
| High-frequency-side noise performance at speed of 20 Km/h (index) | 100 | 70 | 60 | 50 | 50 |
| Low-frequency-side noise performance at speed of 60 Km/h (index) | 100 | 70 | 60 | 50 | 50 |
| High-frequency-side noise performance at speed of 60 Km/h (index) | 100 | 70 | 60 | 50 | 50 |
| Low-frequency-side noise performance at speed of 150 Km/h (index) | 100 | 70 | 60 | 50 | 50 |
| High-frequency-side noise performance at speed of 150 Km/h (index) | 100 | 80 | 70 | 50 | 50 |

As a result of the tests, it has been confirmed that the pneumatic tire in each of the Examples has a better noise performance at each of the running speeds than in the Comparative Example and can decrease cavity resonance sound with a simple configuration that involves merely attaching Helmholtz sound absorbers.

### [Additional Notes]

The present invention is as follows.

### [Present Invention 1]

A pneumatic tire comprising
a plurality of Helmholtz sound absorbers disposed on a tire inner cavity surface, wherein
the plurality of Helmholtz sound absorbers have a first resonance frequency as a maximum resonance frequency and a second resonance frequency as a minimum resonance frequency, and
a difference between the first resonance frequency and the second resonance frequency is 10 to 90 Hz.

### [Present Invention 2]

The pneumatic tire according to Present Invention 1, wherein
the first resonance frequency is 130 to 350 Hz, and
the second resonance frequency is 120 to 340 Hz.

### [Present Invention 3]

The pneumatic tire according to Present Invention 1 or 2, wherein the plurality of Helmholtz sound absorbers are arranged away from each other.

### [Present Invention 4]

The pneumatic tire according to any one of Present Inventions 1 to 3, wherein each of the plurality of Helmholtz sound absorbers is formed of a resin having a shape that does not change at 120°C or lower.

### [Present Invention 5]

The pneumatic tire according to any one of Present Inventions 1 to 4, wherein the plurality of Helmholtz sound absorbers further have at least one resonance frequency different from the first resonance frequency and the second resonance frequency.

### [Present Invention 6]

The pneumatic tire according to Present Invention 5, wherein the plurality of Helmholtz sound absorbers are such that unit widths which are differences between a set of the resonance frequencies adjacent to each other in a frequency band are substantially equal.

### [Present Invention 7]

The pneumatic tire according to Present Invention 6, wherein each of the unit widths is 3 to 10 Hz.

### [Present Invention 8]

The pneumatic tire according to any one of Present Inventions 1 to 7, wherein each of the plurality of Helmholtz sound absorbers includes at least one first sound absorption chamber having the first resonance frequency and at least one second sound absorption chamber having the second resonance frequency.

### [Present Invention 9]

The pneumatic tire according to Present Invention 8, wherein a first sound absorber having the first sound absorption chamber and a second sound absorber having the second sound absorption chamber are formed to be integrated with each other.

### [Present Invention 10]

The pneumatic tire according to any one of Present Inventions 1 to 9, wherein the difference between the first resonance frequency and the second resonance frequency is 10 to 60 Hz.

### [Present Invention 11]

The pneumatic tire according to any one of Present Inventions 1 to 10, further comprising:
a tread portion;
a pair of sidewall portions each extending to an inner side in a tire radial direction from a corresponding one of both ends in a tire axial direction of the tread portion; and
a pair of bead portions each located on the inner side in the tire radial direction relative to a corresponding one of the pair of sidewall portions, wherein
each of the plurality of Helmholtz sound absorbers is disposed on an inner side in the tire axial direction relative to at least one of either of the sidewall portions and either of the bead portions.

## Claims

1. A pneumatic tire (1) comprising
a plurality of Helmholtz sound absorbers (9) disposed on a tire inner cavity surface (1i), wherein
the plurality of Helmholtz sound absorbers (9) have a first resonance frequency (f1) as a maximum resonance frequency (fmax) and a second resonance frequency (f2) as a minimum resonance frequency (fmin), and
a difference (f1-f2) between the first resonance frequency (f1) and the second resonance frequency (f2) is 10 to 90 Hz.

2. The pneumatic tire (1) according to claim 1, wherein
the first resonance frequency (f1) is 130 to 350 Hz, and
the second resonance frequency (f2) is 120 to 340 Hz.

3. The pneumatic tire (1) according to claim 1 or 2, wherein the plurality of Helmholtz sound absorbers (9) are arranged away from each other.

4. The pneumatic tire (1) according to any one of claims 1 to 3, wherein each of the plurality of Helmholtz sound absorbers (9) is formed of a resin having a shape that does not change at 120°C or lower.

5. The pneumatic tire (1) according to any one of claims 1 to 4, wherein the plurality of Helmholtz sound absorbers (9) further have at least one resonance frequency (f) different from the first resonance frequency (f1) and the second resonance frequency (f2).

6. The pneumatic tire (1) according to claim 5, wherein the plurality of Helmholtz sound absorbers (9) are such that unit widths (df) which are differences between a set of the resonance frequencies (f) adjacent to each other in a frequency band are substantially equal.

7. The pneumatic tire (1) according to claim 6, wherein each of the unit widths (df) is 3 to 10 Hz.

8. The pneumatic tire (1) according to any one of claims 1 to 7, wherein each of the plurality of Helmholtz sound absorbers (11) includes at least one first sound absorption chamber (11a) having the first resonance frequency (f1) and at least one second sound absorption chamber (11c) having the second resonance frequency (f2).

9. The pneumatic tire (1) according to claim 8, wherein a first sound absorber (11A) having the first sound absorption chamber (11a) and a second sound absorber (11B) having the second sound absorption chamber (11c) are formed to be integrated with each other.

10. The pneumatic tire (1) according to any one of claims 1 to 9, wherein the difference (f1-f2) between the first resonance frequency (f1) and the second resonance frequency (f2) is 10 to 60 Hz.

11. The pneumatic tire (1) according to any one of claims 1 to 10, further comprising:
a tread portion (2);
a pair of sidewall portions (3) each extending to an inner side in a tire radial direction from a corresponding one of both ends in a tire axial direction of the tread portion (2); and
a pair of bead portions (4) each located on the inner side in the tire radial direction relative to a corresponding one of the pair of sidewall portions (3), wherein
each of the plurality of Helmholtz sound absorbers (9) is disposed on an inner side in the tire axial direction relative to at least one of either of the pair of sidewall portions (3) and either of the pair of bead portions (4).
